# EUROPÄISCHE PATENTSCHRIFT

(11) **EP 0 281 518 B1**
(45) Veröffentlichungstag und Bekanntmachung des Hinweises auf die Patenterteilung: **17.03.1993**
(21) Anmeldenummer: 88810109.4
(22) Anmeldetag: 23.02.1988
(51) Int. Cl.: G01C 1/02, G01C 15/00

(54) **Vermessungsinstrument**
Geodetic instrument
Instrument de géodésie

(30) Priorität: 02.03.1987 CH 788/87
(43) Veröffentlichungstag der Anmeldung: 07.09.1988
(73) Patentinhaber: Leica Heerbrugg AG, CH-9435 Heerbrugg (CH)
(72) Erfinder: Waibel, Rainhard, Dr., CH-9442 Berneck (CH); Dieckow, Werner, CH-9435 Heerbrugg (CH)
(74) Vertreter: Stamer, Harald, Dipl.-Phys.

(56) Entgegenhaltungen:
- CH-A- 592 891
- DE-A- 2 649 927
- FR-A- 2 608 749
- GB-A- 2 074 754
- US-A- 3 227 035

## Beschreibung

Die vorliegende Erfindung betrifft ein Vermessungsinstrument mit einem optischen Instrumententeil zur Abbildung eines Zieles und einem Bildfeld, mit einem Objektiv, mit einer Kamera zum elektronischen Erfassen des im Instrumententeil erzeugten Bildes und mit einer Referenzmarke, wobei das Bild des Ziels und das der Referenzmarke in die Kamera abgebildet werden.

Vermessungsinstrumente dieser Gattung sind bereits bekannt. Als optischer Bestandteil eines solchen Instrumentes dient ein Zielfernrohr. Im Zielfernrohr befindet sich ein Strichkreuz. Dem Fernrohr ist eine Kamera zugeordnet, wobei das von dieser erfasste Bild des Strichkreuzes und des Zieles, der Zielfigur bzw. der Zielmarke, an einem Bildschirm angezeigt werden. Mit Hilfe von Bedienelementen kann man das Zielfernrohr derart einstellen, daß sich die mittlere Partie des Bildes des Zieles und die mittlere Partie des Strichkreuzes überdecken.

Bei einem solchen Instrument können die Meßwerte nur durch Einstellen des optischen Teiles desselben durch den Bediener gewonnen werden. In manchen Anwendungsfällen von Vermessungsinstrumenten wird jedoch verlangt, daß die Meßwerte automatisch erfaßt werden.

In der US 3 227 035 wird ein Vermessungsinstrument mit einer Kamera, einem optischen Instrumentensystem sowie einer Referenzmarke beschrieben. Über das optische System wird ein Objektbild in die Kamera projiziert und mit dem Bild einer Referenzmarke überlagert. Das Objektbild wird im Bereich der Referenzmarke mit zwei komplementären Filtern ausgeblendet. Bei dieser Anordnung gehen somit wichtige Informationen durch Ausblenden verloren. Eine Schaltung zur Bestimmung der Lage der Bildzentren von Referenzmarke und Ziel ist in dieser Schrift nicht offenbart.

Aus der CH-PS 592 891 ist eine optische Messeinrichtung mit einer im Strahlengang angeordneten Messmarke bekannt. Die Messmarke wird aus einer verspiegelten Glasfläche gebildet, die unter 45° im Strahlengang des Instruments angeordnet ist. Über eine Lichtquelle kann diese Messmarke beleuchtet werden, so daß die Marke im Okular wahlweise als Leucht- bzw. Dunkelmarke erscheint. Die in dieser Schrift beschriebene Einrichtung weist weder eine Kamera noch eine elektronische Auswerteeinrichtung zur Bestimmung der Bildzentren von Referenzmarke und Zielobjekt auf. Die Einrichtung wird dazu verwendet, die jeweiligen Objekte in bzw. auf den Messmarken manuell zu zentrieren.

Die Aufgabe der vorliegenden Erfindung ist, ein Vermessungsinstrument anzugeben, das eine automatische Durchführung von Messungen ermöglicht.

Diese Aufgabe wird mit einem Vermessungsinstrument gemäß Anspruch 1 gelöst. Ausführungsformen der Erfindung sind Gegenstand der abhängigen Ansprüche 2 bis 9.

Im Nachstehenden werden Ausführungsbeispiele der vorliegenden Erfindung anhand der beiliegenden Zeichnungen näher erläutert. Es zeigt:
Fig. 1 eine Seitenansicht des vorliegenden Instrumentes,
Fig. 2 eine Frontansicht einer sich im vorliegenden Instrument befindlichen Blende,
Fig. 3 bis 6 weitere Ausführungen der Blende gemäss Fig. 2 und
Fig. 7 eine Blende, die mit Justiermarken versehen ist.

Das vorliegende Vermessungsinstrument weist einen optischen Bestandteil 1 sowie eine Kamera 2 auf. Der optische Instrumententeil 1 dient zur Abbildung eines Zieles bzw. einer Zielmarke (nicht dargestellt), welche sich im Zielraum, z.B. in einem zu vermessenden Gelände, im Inneren eines Gebäudes oder dgl., befinden und welche die jeweilige Stelle des zu vermessenden Objektes markieren. Als eine solche Marke kann beispielsweise eine an sich bekannte Messmarke verwendet werden.

Die Kamera 2 weist eine optische Eintrittspartie 23 auf, in der sich ein Feld aus optoelektrischen Elementen befindet. Diese dienen zum Umwandeln optischer Bilder in elektrische Signale. Solche Kameras sind ebenfalls bereits bekannt. Die Kopelung zwischen der Austrittspartie des optischen Instrumententeiles 1 und der optischen Eintrittspartie 23 der Kamera 2 erfolgt mit Hilfe einer optischen Umlenkvorrichtung 3, welche zwischen diesen zwei Instrumententeilen 1 und 2 geschaltet ist. Diese Umlenkvorrichtung 3 enthält neben weiteren Teilen, wie z.B. einer Abbildungsoptik 8, auch ein Prisma 4, welches die erforderliche Umlenkung der optischen Strahlen zur Kamera 2 bewirkt.

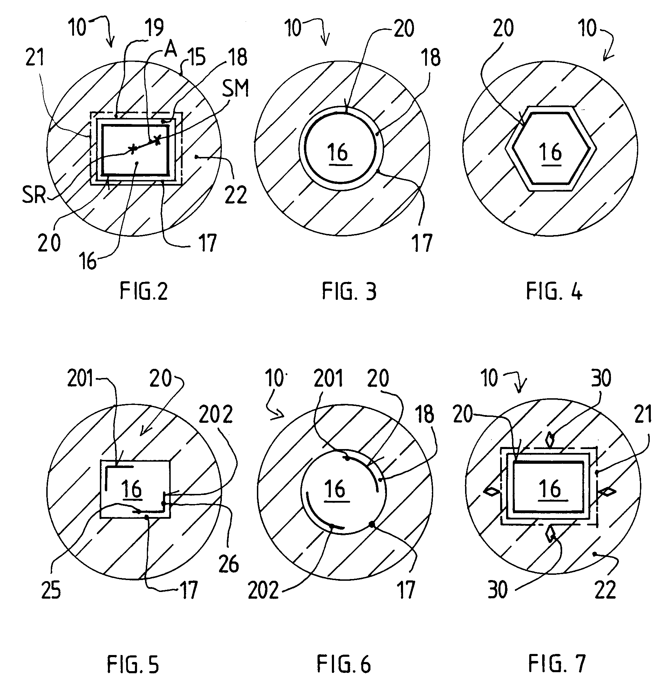

Der optische Teil 1 weist ein Objektiv 5 auf, das sich in der Anfangspartie eines Gehäuses 6 befindet. In der gegenüberliegenden Endpartie dieses Gehäuses 6 befindet sich ein Okular 7, dem die Umlenkvorrichtung 3 zugeordnet ist. In der Ebene, in welcher das vom Objektiv 5 erzeugte reele Bild des Zieles entsteht, befindet sich eine Blende 10, welche eine Referenzmarke (20, Fig. 2 und folgende) trägt. In dieser Ebene sind daher sowohl das Bild des Zieles als auch die Referenzmarke gleichzeitig sichtbar. Das Okular 7 ist in bezug auf diese Ebene derart angeordnet, dass diese Ebene sich in der vorderen Brennebene des Okulars 7 befindet. Durch das Okular 7 können somit das Bild des Zieles und das Bild der Referenzmarke gleichzeitig beobachtet werden.

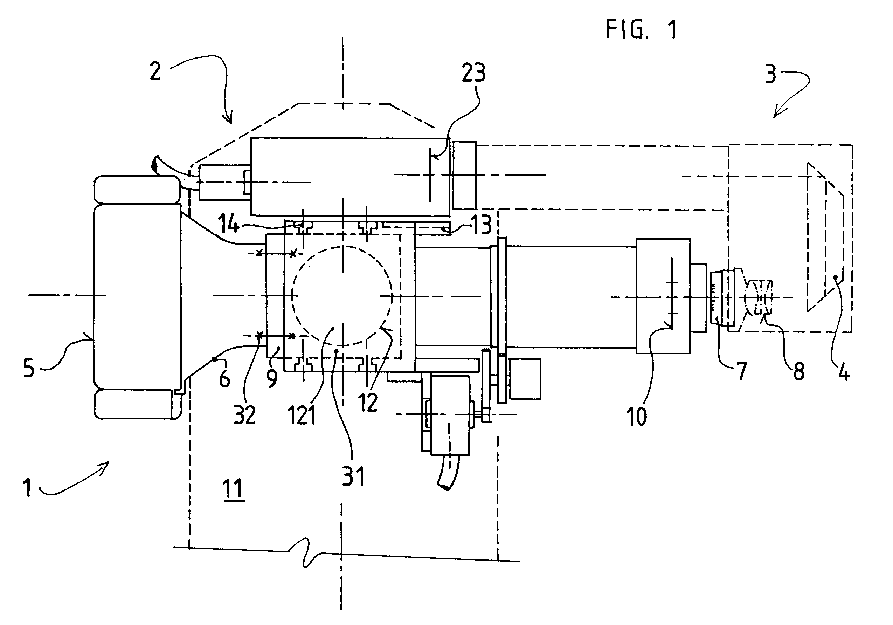

In Fig. 1 ist eine der Stützenseiten 11 des Trägers für das Fernrohr 1 dargestellt. Die Kippachse 12 besteht aus zwei Wellenhälften 121, von welchen nur die in der hinteren Stützseite 11 gelagerte Wellenhälfte 121 in Fig. 1 angedeutet ist. Die von den Lagerstellen abgewandten Enden der Wellenhälften 121 sind an den Seitenflächen einer Hülse 31 befestigt, welche mit diesen Wellenhälften 121 somit eine um die Kippachse drehbare Einheit bildet. Die Kamera 2 befindet sich auf einer Stützplatte 13, welche mit Hilfe von Schrauben 14 auf der Oberseite der Hülse 31 befestigt ist.

Der innere Durchmesser der genannten Hülse 31 ist grösser als der äussere Durchmesser der mittleren Partie des Fernrohrgehäuses 6. Diese mittlere Partie des Gehäuses 6, welche zylinderförmig ist, ist mit einer senkrecht zur Längsachse des Gehäuses 6 stehenden Halteplatte 9 versehen. In den Ecken dieser Halteplatte 9 sind Bohrungen ausgeführt, durch welche Befestigungsschrauben 32 für das Fernrohr 1 hindurchgehen. Diese Schrauben 32 sind in Gewindebohrungen eingeschraubt, welche in der Frontseite der Hülse 31 ausgeführt sind. Durch die beschriebene Befestigung der Kamera 2 auf der Hülse 31 kann jegliche mechanische Beanspruchung des Gehäuses 6 des Fernrohres 1 durch die Kamera 2 verhindert werden, obwohl die Gesamtlänge des vorliegenden Instrumentes der Länge eines gewöhnlichen Vermessungsinstrumentes gleicht.

Es ist auch möglich, das Okular wegzulassen und die Eintrittspartie der Umlenkvorrichtung 3 der Blende 10 direkt zuzuordnen.

Fig. 2 bis 7 zeigen mehrere Ausführungen der Blende 10. Der äussere Rand 15 der Blende 10 ist praktisch kreisförmig, weil die Blende 10 im Gehäuse 6 anzuordnen ist. Man kann den Rand 15 allerdings auch als die äussere Grenze des Bildfeldes des Fernrohres 1 betrachten. Im mittleren Bereich der Blende 10 ist eine Oeffnung 16 ausgeführt, welche einen Rand 17 aufweist. Etwa durch die Mitte dieser Blendenöffnung 16 geht die Ziellinie des Fernrohres 1 hindurch. In der Blendenöffnung 16 befindet sich die bereits erwähnte Referenzmarke 20.

Im in Fig. 2 dargestellten Beispiel weist die Referenzmarke 20 die Form eines viereckigen Rahmens, der sich innerhalb der Blendenöffnung 16 befindet. Dies bedeutet, dass der äussere Rand der Referenzmarke 20 sich in einem Abstand vom inneren Rand 17 der Blendenöffnung 16 befindet. Der zwischen dem äusseren Rand der Referenzmarke 20 und dem Rand 17 der Blendenöffnung 16 liegender Abschnitt 18 der Blende 10 ist für die anfallende Strahlung gleich durchlässig wie das sich innerhalb der Referenzmarke 20 befindliche Gebiet der Blende 10. Die Referenzmarke 20 ist derart ausgeführt, das die auf der Blende 10 auftreffende Strahlung am Durchgang durch die Blende 10 wenigstens teilweise gehindert wird.

Die Kamera 2 erfasst den mittleren Bereich der Blende 10. Mittels an sich bekannten Massnahmen kann man erreichen, dass der von der Kamera 2 erfasste Bereich der Blende 10 grösser ist als die Fläche der Blendenöffnung 16. Dies bedeutet, dass die Kamera 2 nicht nur die Fläche der Blendenöffnung 16 sondern auch jenen Bereich 19 der für die Strahlung undurchlässigen Partie 22 der Blende 10 erfassen kann, welcher sich an die Blendenöffnung 16 unmittelbar anschliesst. In dieser Weise sind die Abmessungen des Kameragesichtsfeldes nicht nur in der horizontalen sondern auch in der vertikalen Richtung erweitert. Die äussere Grenze des Gesichtsfeldes der Kamera 2 ist mit 21 bezeichnet.

Fig. 3 zeigt eine Blende 10, bei welcher der Rand 17 der Blendenöffnung 16 kreisförmig ist und bei der die Referenzmarke 20 die Form eines Ringes aufweist, der sich in einem Abstand 18 vom Rand 17 der Blendenöffnung 16 befindet. Dieser Abstand 18 ist im dargestellten Beispiel in jeder beliebigen Richtung der Blende 10 gleich gross. Fig. 4 zeigt eine weitere Ausführungsform der Referenzmarke 20, bei der die Blendenöffnung 16 und die Referenzmarke 20 sechseckig sind.

Unter Umständen kann es zweckmässig sein, die Breite des durchlässigen Bereiches 18 zwischen der Referenzmarke 20 und dem Blendenrand 17 entlang der Referenzmarke 20 veränderlich bzw. ungleich gross zu machen. Dies kann sogar so weit gehen, dass die Referenzmarke 20 als ein Ausläufer aus dem Blendenrand 17 ausgeführt ist.

Gemäss Fig. 5 und 6 kann die Referenzmarke 20 als ein oder mehrere, im vorliegenden Fall als zwei Ausschnitte 201 und 202 aus einer in sich geschlossenen Figur ausgebildet sein. Für die Referenzmarke 20 gemäss Fig. 5 stellt ein Viereck die in sich geschlossene Figur dar. Für die Referenzmarke 20 nach Fig. 6 ist dies ein Kreis. Der jeweilige Abschnitt 201 und 202 der Referenzmarke 20 nach Fig. 5 ist etwa L-förmig, wobei die Schenkel 25 und 26 des jeweiligen L-förmigen Abschnittes 201 bzw. 202 der Referenzmarke 20 gleich oder unterschiedlich lang sein können. Im dargestellten Beispiel sind die Schenkel 25 und 26 unterschiedlich lang, wobei die längeren Schenkel 25 horizontal verlaufen. Die Abschnitte 201 und 202 der Referenzmarke 20 sind in einander gegenüberliegenden Ecken der viereckigen Blendenöffnung 16 angeordnet, wobei die Breite des durchlässigen Bereiches 18 der Blende 10 zwischen den Abschnitten 201 und 202 der Referenzmarke 20 und dem Rand 17 der Blendenöffnung 16 bei den beiden Markenabschnitten 201 und 202 gleich und zugleich unveränderlich ist.

Bei der Blende 10 gemäss Fig. 6 besteht die Referenzmarke 20 aus zwei bogenförmigen Abschnitten 201 und 202, die in einer kreisförmigen Blendenöffnung 16 einander diametral gegenüberliegend angeordnet sind. Auch hier ist der Abstand 18 zwischen den Markenabschnitten 201 und 202 und dem Rand 17 der Blendenöffnung 16 gleich und gleichbleibend.

In Fig. 7 ist eine Blende 10 dargestellt, welche der Blende nach Fig. 2 sehr ähnelt. Im Unterschied zur zuletzt genannten Blende weist die Blende 10 gemäss Fig. 7 Justiermarken 30 auf. Diese Justiermarken 30 dienen zur Einstellung der Blende 10 innerhalb des Fernrohres 1, wie dies allgemein bekannt ist. Da diese Justiermarken 30 an der Gewinnung von Messresultaten nicht unmittelbar beteiligt sind, befinden sie sich ausserhalb der äusseren Grenze 21 des Gesichtsfeldes der Kamera 2 im für die Strahlung sonst undurchdringlichen Bereich 22 der Blende 10. Im dargestellten Ausführungsbeispiel sind die Justiermarken 30 rautenförmig. Symmetrisch zur jeweiligen Seite des Rahmens 20 befindet sich jeweils eine solche Justiermarke 30, wobei die längere Diagonale der Raute 30 senkrecht zur jeweiligen Seite der viereckförmigen Referenzmarke 20 steht.

In der optischen Eintrittspartie der Kamera 2, welche über die Umlenkvorrichtung 4 mit dem Fernrohr 1 gekoppelt ist, befindet sich ein Feld aus Elementen, welche auf die auf diesen auftreffende Strahlung, beispielsweise Licht, empfindlich sind. Diese Sensoren wandeln die Strahlung in elektrische Signale um. Die sensitiven Elemente sind innerhalb des genannten Feldes so geordnet, dass sie Reihen und Spalten bilden.

Die Form und die Grösse des Sensorfeldes ist durch die äussere Grenze 21 des Gesichtsfeldes der Kamera 2 angedeutet. Für die Funktion des vorliegenden Instrumentes ist es ohne Bedeutung, ob die Fläche des Sensorfeldes tatsächlich so gross ist, wie dies durch die Grenzlinie 21 angegeben ist, oder ob die Begrenzung 21 des Sensorfeldes sich aus einer Projektion dieses Feldes in die Ebene der Blende 10, beispielsweise durch die Umlenkvorrichtung 4, ergab. Dem jeweiligen auf die Strahlung empfindlichen Element des Sensorfeldes 21 ist in dieser Weise ein bestimmter elementarer Bereich der Fläche der Blende 10 zugeordnet, die durch die Grenzlinie 21 des Bildfeldes der Kamera 2 begrenzt ist. Das Bildfeld der Kamera 2 umfasst somit auch die Randpartie 19 der Blende 10. Umgekehrt kann man sagen, dass der Bestrahlungszustand des jeweiligen Elementarbereiches der Blende 10 sich auf das entsprechende Sensorelement der Kamera 2 auf dem genannten Zuordnungsweg auswirkt. Mit Hilfe geeigneter elektronischer Kreise kann man den Ladungszustand der Sensoren ermitteln und das dadurch gewonnene Signal zur Verarbeitung an weitere Kreise weiterleiten. Solche Kameras 2 gehören zum Stand der Technik.

Wenn sich Strahlung von einem elementaren Bereich der Blende 10 zum entsprechenden sensitiven Element der Kamera 2 fortpflanzt, dann erscheint am Ausgang aus diesem Element ein elektrisches Signal. Liegt keine Bestrahlung vor, dann gibt das betreffende Sensorelement kein elektrisches Signal ab. Von diesen an sich bekannten Erkenntnissen ausgehend kann man sagen, dass sensitive Elemente, welche sich hinter den für die verwendete Strahlung undurchdringlichen Elementarbereichen der Blende 10, z.B. hinter der Referenzmarke 20 bzw. deren Bestandteilen 201 und 202, sowie hinter dem Randbereich 19 der Blendenöffnung 16, befinden, kein elektrisches Signal abgeben. Bei den bestrahlten Sensorelementen gilt selbstverständlich das Gegenteil. Der Ladungszustand der Sensorelemente im genannten Feld wird durch die genannten elektronischen Kreise zwar sequentiell abgefragt, es sind jedoch Verfahren und Schaltungskreise bekannt, die es ermöglichen, das sequentielle Signal so umzugestalten, dass ein elektrisches Bild entsprechend dem optischen Bild auf der Blende 10 entsteht.

In dieser Weise kann der Verlauf des Kante 17 der Blendenöffnung 16 und/oder die Form der Referenzmarke 20 elektrisch festgestellt werden und zwar als Kontrast zu den unverdeckten Elementarflächen der Blende 10. Eine erste dieser Flächen befindet sich im durch die Referenzmarke 20 begrenzten Bereich der Blendenöffnung 16, während eine zweite solcher Flächen 18 zwischen dem äusseren Rand der Referenzmarke 20 und dem Rand 17 der Blendenöffnung 16 liegt.

Der optische Teil 1 des vorliegenden Instrumentes lässt sich zunächst derart ausrichten, dass das Bild der gewünschten bzw. gesuchten Zielfigur in jenen Bereich der Blendenöffnung 16 fällt, der sich innerhalb der Referenzmarke 20 befindet. Das Bild der Zielfigur zeichnet sich, gleich wie die Referenzmarke 20 usw., durch nebeneinander liegende Kontraste zwischen hell und dunkel aus. Der der jeweiligen Elementarfläche der Blendenöffnung 16 zugeordnete Sensor in der Kamera 2 liefert daher ein elektrisches Signal oder nicht, je nach dem, ob er sich in einem hellen oder dunklen Bereich des Bildes der Zielfigur befindet. In dieser Weise lässt sich nicht nur die Form des Bildes der Zielfigur sondern auch dessen Lage innerhalb der Blendenöffnung 16 elektrisch erfassen. Die an die Kamera 2 angeschlossenen Schaltungskreise können daher auch die grundsätzliche Auskunft darüber liefern, ob sich das Bild einer oder einer ganz bestimmten Zielfigur in der Blendenöffnung 16 befindet oder nicht.

Nachdem es feststeht, dass in der Blendenöffnung 16 sich das Bild des gewünschten Zieles befindet, kann man die Grobablesung der Koordinaten dieses Zieles, beispielsweise von den entsprechenden Teilkreisen des Vermessungsinstrumentes, durchführen. Um die genaue Position des Zieles angeben zu können, muss die Entfernung zwischen der Ziellinie des optischen Instrumententeiles und dem Bild der Zielmarke allerdings noch ermittelt werden.

Für die Referenzmarke 20 wählt man vorteilhaft eine Form, die sich mathematisch leicht beschreiben bzw. erfassen lässt. Die Referenzmarke 20 kann die Form eines Vierecks, eines Vielecks, eines Kreises oder wenigstens eines Ausschnittes aus diesen bzw. eines Teilen davon haben. Es sind Schaltungskreise bereits bekannt, welche aus den solche Kurven wiedergegebenen elektrischen Signalen den Schwerpunkt der jeweiligen Kurve errechnen können. Ein solcher Kreis kann Bestandteil der an den Ausgang der Kamera 2 angeschlossenen Schaltungsanordnung sein. Der in dieser Weise errechnete Schwerpunkt SR der Referenzmarke 20 bildet einen der Punkte der Ziellinie des Fernrohres 1.

Der genannte Schaltungskreis kann in gleicher Weise auch den Schwerpunkt SM des Bildes des Zieles errechnen. Es liegen nun somit zwei Schwerpunkte SR und SM vor, die sich in den meisten Fällen in einem Abstand voneinander befinden. Die Strecke A, welche diese zwei Punkte SR und SM verbindet, hat eine bestimmte Länge und eine bestimmte Richtung. Die an die Kamera 2 angeschlossene elektrische Schaltungsanordnung ist ferner so ausgebildet, dass sie in der Lage ist, die Länge und die Richtung der genannten Strecke A zwischen den zwei Schwerpunkten SR und SM zu ermitteln. Mit den diese Strecke A betreffenden Angaben werden die bereits erwähnten und von den Teilkreisen des Instrumentes abgelesenen Grobangaben korrigiert, so dass genaue Angaben über die Lage des Zieles gemacht werden können.

Es versteht sich, dass die Referenzmarke noch anders ausgeführt sein kann. Als Referenzmarke kann beispielsweise allein die Kante 17 bzw. der Randbereich 19 der Blendenöffnung 16 dienen. Die vorliegende Erfindung bezieht sich auf alle Ausführungmöglichkeiten des in diesen Unterlagen offenbarten Gegenstandes, welche im Rahmen des geltenden Schutzbegehrens liegen.

## Patentansprüche

1. Vermessungsinstrument mit einem optischen Instrumententeil (1) zur Abbildung eines Zieles und einem Bildfeld (15), mit einem Objektiv (5), mit einer Kamera (2) zum elektronischen Erfassen des im Instrumententeil (1) erzeugten Bildes und mit einer als nicht gerade Linie ausgebildeten Referenzmarke (17;20), wobei das Bild des Ziels und das der Referenzmarke in die Kamera (2) abgebildet werden, dadurch gekennzeichnet, daß eine Blende (10) in einer Ebene des vom Objektiv (5) erzeugten reellen Bildes des anvisierten Zieles angeordnet ist, die Referenzmarke (17,20) außerhalb der optischen Achse des Instrumententeils (1) in einer Öffnung (16) der Blende (10) vorgesehen ist, wobei der Kamera (2) eine elektronische Schaltungsanordnung zur Lageerkennung der Bildschwerpunkte (SR; SM) der Referenzmarke (17;20) und des Ziels zugeordnet ist.

2. Instrument nach Anspruch 1, dadurch gekennzeichnet, daß die Referenzmarke (17;20) die Form eines eckigen oder kreisförmigen Rahmens (17;20) oder wenigstens eines Teiles (201 bzw. 202) desselben aufweist.

3. Instrument nach Anspruch 2, dadurch gekennzeichnet, daß die Referenzmarke (17;20) oder wenigstens ein Teil (201 bzw. 202) davon sich innerhalb des Bildfeldes (15) des optischen Instrumententeiles (1) befindet.

4. Instrument nach Anspruch 2, dadurch gekennzeichnet, daß ein Ausschnitt (16) aus dem Bildfeld (15) vorgesehen ist, daß dieser Ausschnitt (16) sich in jenem Bereich des optischen Instrumententeils (1) befindet, durch welchen die optische Achse hindurchgeht, und daß die Referenzmarke durch die Begrenzung (17) des genannten Ausschnitts (16) definiert ist.

5. Instrument nach Anspruch 2, dadurch gekennzeichnet, daß ein Ausschnitt (16) aus dem Bildfeld (15) vorgesehen ist, daß dieser Ausschnitt (16) sich in jenem Bereich des optischen Instrumententeils (1) befindet, durch welchen die optische Achse hindurchgeht, und daß die Referenzmarke oder wenigstens ein Teil (201 bzw. 202) derselben sich innerhalb dieses Ausschnitts (16) befindet.

6. Instrument nach Anspruch 1, dadurch gekennzeichnet, daß außerhalb des von der Kamera (2) noch erfaßten Bereiches des Bildfeldes (19 bzw. 21) Justiermarken (30) an der Blende (10) angebracht sind.

7. Instrument nach Anspruch 1, dadurch gekennzeichnet, daß der optische Instrumententeil (1) als ein Fernrohr ausgebildet ist und daß die Referenzmarke (20) sich in der vorderen Brennebene des Okulars (7) befindet.

8. Instrument nach Anspruch 1, dadurch gekennzeichnet, daß die Kamera (2) auf der Kippachse (12) des optischen Instrumententeiles (1) abgestützt ist, und daß eine optische Umlenkvorrichtung (4) zwischen der Austrittspartie (7 bzw. 8) des optischen Instrumententeiles (1) und der optischen Eintrittspartie (23) der Kamera (2) geschaltet ist.

9. Instrument nach Anspruch 1, dadurch gekennzeichnet, daß die Schaltungsanordnung zur Ermittlung der Bildschwerpunkte (SR,SM) zusätzlich die Länge und Richtung der zwischen den beiden Bildzentren liegenden Strecke (A) ermittelt.

## Claims

1. Measuring instrument with an optical instrument part (1) for the imaging of a target and an image field (15), with an objective (5), with a camera (2) for the electronic detection of the image produced in the instrument part (1) and with a reference mark (17; 20) constructed as a non-rectilinear line, wherein the image of the target and that of the reference mark are formed in the camera (2), characterised thereby that a light stop (10) is arranged in a plane of the actual image, produced by the objective (5),of the sighted target, and the reference mark (17, 20) is provided in an opening (16) of the light stop (10) outside the optical axis of the instrument part (1), wherein associated with the camera (2) is an electronic circuit arrangement for the position recognition of the image centres of concentration (SR; SM) of the reference mark (17; 20) and of the target.

2. Instrument according to claim 1, characterised thereby that the reference mark (17; 20) has the form of an angular or circular frame (17; 20) or at least a part (201 or 202) thereof.

3. Instrument according to claim 2, characterised thereby that the reference mark (17; 20) or at least a part (201 or 202) thereof is disposed within the image field (15) of the optical instrument part (1).

4. Instrument according to claim 2, characterised thereby that a cutout (16) from the image field (15) is provided, that this cutout (16) is disposed in every region of the optical instrument part (1) through which the optical axis passes, and that the reference mark is defined by the boundary (17) of the said cutout (16).

5. Instrument according to claim 2 characterised thereby that a cutout (16) from the image field (15) is provided, that this cutout (16) is disposed in every region of the optical instrument part (1) through which the optical axis passes, and that the reference mark or at least a part (201 or 202) thereof is disposed within this cutout (16).

6. Instrument according to claim 1, characterised thereby that sighting marks (30) are applied at the diaphragm (10) outside the region, still detected by the camera (2) of the image field (19 or 21).

7. Instrument according to claim 1, characterised thereby that the optical instrument part (1) is constructed as a telescope and that the reference mark (20) is disposed in the front focal plane of the eyepiece.

8. Instrument according to claim 1, characterised thereby that the camera (2) is supported on the tilt axis (12) of the optical instrument part (1), and that an optical deflecting device (4) is connected between the exit part (7 or 8) of the optical instrument part (1) and the optical entry part (23) of the camera (2).

9. Instrument according to claim 1, characterised thereby that the circuit arrangement for determining the image centres of concentration (SR SM) additionally determine the length and direction of the path (A) disposed between the two image centres.

## Revendications

1. Instrument de géodésie comprenant une partie d'instrument optique (1) pour la représentation d'une cible et d'un champ visuel (15), avec un objectif (5), avec une caméra (2) pour la détection électronique de l'image produite dans la partie d'instrument (1) et avec une marque de référence (17 ; 20) qui n'est pas réalisée sous forme de ligne droite, l'image de la cible et celle de la marque de référence étant représentées dans la caméra (2), caractérisé en ce qu'un obturateur (10) est disposé dans un plan de l'image réelle produite par l'objectif (5) de la cible visée, en ce que la marque de référence (17, 20) est prévue à l'extérieur de l'axe optique de la partie d'instrument (1) dans une ouverture (16) de l'obturateur, un agencement de circuits électroniques étant associé à la caméra (2) pour la détection de la position des points de gravitation ou points principaux d'images (SR; SM) de la marque de référence (17 ; 20) et de la cible.

2. Instrument selon la revendication 1, caractérisé en ce que la marque de référence (17 ; 20) présente la forme d'un cadre angulaire ou circulaire (17 ; 20) ou au moins une partie (201 ou 202) de celui-ci.

3. Instrument selon la revendication 2, caractérisé en ce que la marque de référence (17 ; 20) ou au moins une partie de celle-ci (201 ou 202) se trouve à l'intérieur du champ visuel (15) de la partie d'instrument optique (1).

4. Instrument selon la revendication 2, caractérisé en ce qu'il est prévu une partie découpée (16) du champ visuel (15), en ce que cette partie découpée (16) se trouve dans la région de la partie d'instrument optique (1) à travers laquelle passe l'axe optique, et en ce que la marque de référence est définie par la délimitation (17) de ladite partie découpée (16).

5. Instrument selon la revendication 2, caractérisé en ce qu'il est prévu une partie découpée (16) du champ visuel (15), en ce que cette partie découpée (16) se trouve dans la région de la partie d'instrument optique (1) à travers laquelle passe l'axe optique, et en ce que la marque de référence ou au moins une partie (201 ou 202) de celle-ci se trouve à l'intérieur de cette partie découpée (16).

6. Instrument selon la revendication 1, caractérisé en ce qu'on a disposé à l'extérieur de la zone encore détectée par la caméra (2) du champ visuel (19 ou 21) des marques de réglage (30) sur l'obturateur (10).

7. Instrument selon la revendication 1, caractérisé en ce que la partie d'instrument d'optique (1) est réalisée sous forme de lunette de visée, et en ce que la marque de référence (20) se trouve dans le plan focal antérieur de l'oculaire (7).

8. Instrument selon la revendication 1, caractérisé en ce que la caméra (2) prend appui sur l'axe de renversement (12) de la partie d'instrument optique (1), et en ce qu'un dispositif de déviation optique (4) est monté entre la partie de sortie (7 ou 8) de la partie d'instrument optique (1) et la partie d'entrée d'optique (23) de la caméra (2).

9. Instrument selon la revendication 1, caractérisé en ce que l'agencement de circuits électroniques pour la détection des points de gravitation ou points principaux de l'image (SR, SM) détermine de plus la longueur et la direction du trajet (A) se trouvant entre les deux points de gravitation de l'image.
